# EUROPEAN PATENT SPECIFICATION

(11) **EP 3 327 541 B1**
(45) Date of publication and mention of the grant of the patent: **13.10.2021**
(21) Application number: 15882443.3
(22) Date of filing: 30.10.2015
(51) Int. Cl.: G06F 1/16, G06F 3/0346, G06F 3/0487

(54) **METHOD, APPARATUS AND WEARABLE DEVICE FOR REALIZING DISPLAY**
VERFAHREN, EINRICHTUNG UND WEARABLE-VORRICHTUNG ZUR ERZEUGUNG EINER ANZEIGE
PROCÉDÉ, APPAREIL ET DISPOSITIF VESTIMENTAIRE POUR RÉALISER UN AFFICHAGE

(30) Priority: 24.07.2015 CN 201510443008
(43) Date of publication of application: 30.05.2018
(73) Proprietor: ZTE Corporation, Shenzhen, Guangdong 518057 (CN)
(72) Inventor: ZHANG, Baisheng, Shenzhen Guangdong 518057 (CN); FU, Min, Shenzhen Guangdong 518057 (CN)
(74) Representative: Canzler & Bergmeier Patentanwälte Partnerschaft mbB
(86) International application number: PCT/CN2015/093440
(87) International publication number: WO 2016/131304

(56) References cited:
- EP-A2- 2 741 176
- WO-A2-2007/069116
- CN-A- 103 809 752
- CN-A- 104 090 649
- CN-A- 104 223 613
- US-A1- 2009 195 497
- US-A1- 2009 265 671
- US-A1- 2013 235 008
- US-A1- 2015 077 438

## Description

### Technical Field

Embodiments of the present disclosure relate to wearable device technologies, and more particularly to a display implementation method and a respective computer-readable storage medium, and a wearable device.

### Background

Wearable devices such as smart bracelets, smart watches and smart watchbands are becoming more and more popular. A smart watchband, for example, is provided to expand some functions which cannot be included in a smart watch due to size limitation of the smart watch. Some wearable devices are not provided with display screens, and some wearable devices are provided with only one display screen on a watch face.

In order to enable a user to more conveniently and quickly see needed information, display expansion will be an inevitable development tendency. Moreover, soft screen technologies are quickly developed, and a flexible Light Emitting Diode (LED) screen will be quickly developed. These technologies bring feasible solutions to the expansion of display in the wearable devices.

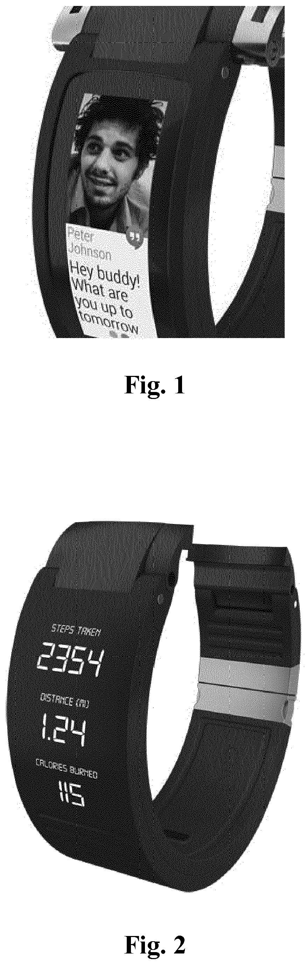

At present, related display expansion solutions in the industry are as shown in Fig. 1 and Fig. 2. A segment of screen is embedded into a fixed position in a smart watchband. Thus, the position of displayed information is fixed in the watchband, and the information cannot be moved at will. When needing to see information, a user needs to manually rotate the smart watchband to place the screen in front of the eyes of the user, so as to see the information displayed on the screen.

Patent documents CN 103809752, US 2013/235008, WO 2007/069116, US2009/265671 and US 2015/077438 provide respective technical solutions; however, the above mentioned problem still remains unsolved.

### Summary

The following is a brief introduction for a subject matter described herein in detail. The brief introduction is not intended to restrict the scope of protection of claims.

Some embodiments of the present disclosure provide a display implementation method and a wearable device, which can be capable of conveniently and quickly displaying information on a wearable device.

An embodiment of the present disclosure provides a display implementation method. When there is information to be displayed, the method includes the acts as follows. A wearable device acquires a first angle and a second angle for determining a display region.

The display region for displaying information in correspondence to a current working mode is determined according to the obtained first angle and second angle.

Before the wearable device acquires the first angle and the second angle for determining the display region, the method further includes an act of calibrating the wearable device.

The wearable device is calibrated in a manner as follows.

A space coordinate system of the wearable device is set up. Specifically, the space coordinate system is set up by taking a first direction of a front surface of the wearable device as a y axis, taking a second direction of the front surface of the wearable device as an x axis, and taking an upward direction perpendicular to the front surface of the wearable device as a z axis.

A state in which the front surface of the wearable device points to a vertically upward direction is taken as a space angle standard. An angle, measured in the state, between the x axis and a horizontal plane is 0 degree, an angle, measured in the state, between the y axis and the horizontal plane is 0 degree, and an angle, measured in the state, between the z axis and the horizontal plane is +90 degrees.

The first angle is the angle between the x axis and the horizontal plane.

The second angle is the angle between the y axis and the horizontal plane. If the working mode is a first working mode, the display region for displaying information is determined in a manner as follows.

A pre-set first corresponding relationship between first and second angles and a display region is searched according to the first angle and the second angle to determine the display region.

If the working mode is a second working mode, the display region for displaying information is determined in a manner as follows.

A pre-set second corresponding relationship between first and second angles and a display region is searched according to the first angle and the second angle to determine the display region.

The method further includes an act of switching the working mode of the wearable device.

The working mode is switched in one of alternative manners as follows.

The wearable device automatically switches between the first working mode and the second working mode according to time, and intensity of acceleration and angle variations detected by an acceleration sensor and a gyroscope.

Or, the wearable device enters the first working mode or the second working mode based on manual setting selection.

In an embodiment, before switching the working mode, the method further includes an act of setting configuration information indicative of whether to switch between the first working mode and the second working mode.

Another embodiment of the present disclosure provides a wearable device, which includes an acquisition unit, a determination unit, and a display unit.

The acquisition unit is configured to acquire a first angle and a second angle for determining a display region.

The determination unit is configured to determine, according to the obtained first angle and second angle, the display region for displaying information in correspondence to a current working mode.

The wearable device further includes a calibration unit configured to calibrate the wearable device.

The calibration unit is configured to: set up a space coordinate system of the wearable device, wherein the space coordinate system is set up by taking a first direction of a front surface of the wearable device as a y axis, taking a second direction of the front surface of the wearable device as an x axis, and taking an upward direction perpendicular to the front surface of the wearable device as a z axis; and
take a state in which the front surface of the wearable device points to a vertically upward direction as a space angle standard, wherein an angle, measured in the state, between the x axis and a horizontal plane is 0 degree, an angle, measured in the state, between the y axis and the horizontal plane is 0 degree, and an angle, measured in the state, between the z axis and the horizontal plane is +90 degrees.

The first angle is the angle between the x axis and the horizontal plane, and the second angle is the angle between the y axis and the horizontal plane.

The determination unit is configured to:
search, when the working mode is a first working mode, a pre-set first corresponding relationship between first and second angles and a display region according to the first angle and the second angle to determine the display region; and
search, when the working mode is a second working mode, a pre-set second corresponding relationship between first and second angles and a display region according to the first angle and the second angle to determine the display region.

The apparatus further includes a working mode management unit configured to:
automatically switch, according to time, and intensity of acceleration and angle variations detected by an acceleration sensor and a gyroscope, the wearable device between the first working mode and the second working mode;
or, make the wearable device enter the first working mode or the second working mode based on manual setting selection.

In an embodiment, the working mode management unit is further configured to set configuration information indicative of whether to automatically switch between different working modes.

In an embodiment, the display unit is a 360° region surrounding the wearable device, or a segment of camber surface in the wearable device.

According to the solution of the present disclosure, a wearable device acquires a first angle and a second angle for determining a display region; and the display region for displaying information in correspondence to a current working mode is determined according to the obtained first angle and second angle. By means of the display implementation method based on a wearable device in some embodiments of the present disclosure, information can be conveniently and quickly displayed on the wearable device. The method can correctly and automatically display information needing to be displayed in front of the eyes of a user without the need for the user to manually adjust the position of a watchband to find the displayed information. For example, every time the user raises the hand, visual information such as time information can be correctly displayed at a suitable position in front of the eyes of the user.

In some embodiments, the wearable device also switches between different working modes, and enter the corresponding working mode according to user demands, thereby better ensuring the correctness of display implementation.

After the drawings and the detailed descriptions are read and understood, other aspects may be understood.

### Brief Description of the Drawings

The drawings illustrated herein are intended to provide a deeper understanding for the present disclosure, and form a part of the present application. The schematic embodiments and illustrations of the present disclosure are intended to explain the present disclosure, and do not form improper limits to the present disclosure. In the drawings:
Fig. 1 is a schematic diagram of a first embodiment for display expansion in a wearable device;
Fig. 2 is a schematic diagram of a second embodiment for display expansion in a wearable device;
Fig. 3 is a flowchart of a display implementation method according to an embodiment of the present disclosure;
Fig. 4 is a schematic diagram of an embodiment for setting up a space coordinate system and dividing regions of a wearable device, e.g., a smart bracelet, according to an embodiment of the present disclosure; and
Fig. 5 is a composition structure diagram of a display implementation apparatus according to an embodiment of the present disclosure.

### Detailed Description of the Embodiments

In order to make the aims, solutions and advantages of the present disclosure clearer, the embodiment of the present disclosure will be elaborated hereinbelow in conjunction with the drawings. It may be appreciated that embodiments in the present disclosure and features in the embodiments may be combined mutually under the condition of no conflicts.

As for a wearable device such as a smart bracelet and a smart watchband having a 360° display function or having a function of displaying via partial sections (i.e., not the 360° display) such as a segment of camber surface, some embodiments of the present disclosure will provide a method capable of correctly and automatically displaying information needing to be displayed in front of the eyes of a user without the need for the user to manually adjust the position of a watchband to find the displayed information. For example, every time the user raises the hand, visual information such as time information can be correctly displayed at a suitable position in front of the eyes of the user.

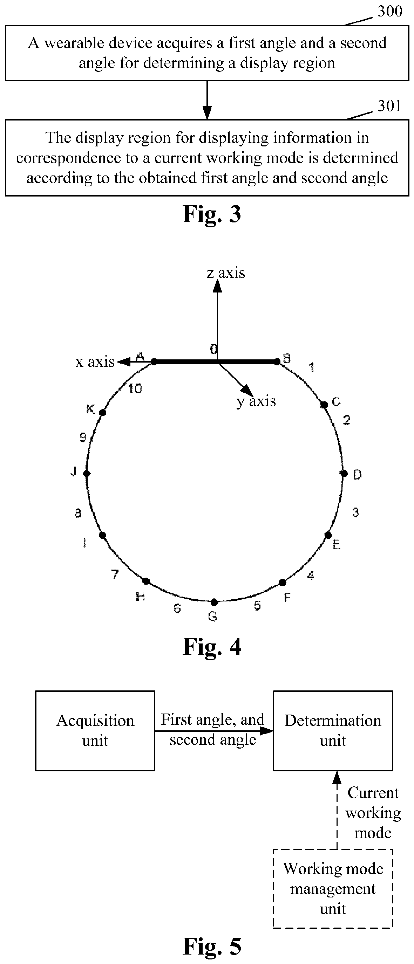

Fig. 3 is a flowchart of a display implementation method according to an embodiment of the present disclosure. As shown in Fig. 3, when there is information to be displayed, the method includes the acts as follows.

At act 300, a wearable device acquires a first angle and a second angle for determining a display region.

Fig. 4 is a schematic diagram of an embodiment for setting up a space coordinate system and dividing regions of a wearable device, e.g., a smart bracelet, according to an embodiment of the present disclosure. As shown in Fig. 4, a space coordinate system is set up by taking a first direction of a watch face such as a direction pointing at three o'clock as a y axis, taking a second direction of the watch face such as a direction pointing at six o'clock as an x axis and taking an upward direction perpendicular to the watch face as a z axis. It is supposed that a smart bracelet forms a circle by a watch face (thickened straight line segment AB as shown in Fig. 4) and a watchband (arc segment AB as shown in Fig. 4). The watchband may be equally divided into N segments (N>0). It is supposed that the segments are identified, if N=10, as 1, 2, 3, ..., 10 respectively and the watch face is identified as 0. A central angle corresponding to the watch face is 60 degrees, and a central angle corresponding to each segment of arc of the watchband is 30 degrees. It may be appreciated that if a wearable device does not have a watch face, a space coordinate system is set up by taking a central position of the wearable device such as a front surface of the wearable device as the watch face. A specific implementation manner may be easily implemented by those skilled in the art, and will not be elaborated herein.

In the present act, the first angle and the second angle is obtained via a gyroscope or other angle sensors. A specific obtaining manner will not be illustrated in the embodiment of the present disclosure. The scope of protection of the embodiment of the present disclosure is not limited to any specific obtaining manner.

The first angle in the present act is the angle between the x axis and the horizontal plane, and the second angle is the angle between the y axis and the horizontal plane.

Before the wearable device acquires the first angle and the second angle for determining the display region, the method in the embodiment of the present disclosure further includes the act as follows.

The wearable device is calibrated. A state in which the front surface of the wearable device points to a vertically upward direction is taken as a space angle standard. An angle, measured in the state by e.g., the gyroscope or other angle sensors, between the x axis and a horizontal plane is 0 degree, an angle, measured in the state by e.g., the gyroscope or other angle sensors, between the y axis and the horizontal plane is 0 degree, and an angle, measured in the state by e.g., the gyroscope or other angle sensors, between the z axis and the horizontal plane is 90 degrees. Specifically, the wearable device is adjusted by making the watch face or a bracelet screen point to a vertically upward direction, i.e., adjusting an angle between the x axis and the horizontal plane to be 0 degree, adjusting an angle between the y axis and the horizontal plane to be 0 degree, and adjusting an angle between the z axis and the horizontal plane to be +90 degrees. Specific calibration for the wearable device is completed before delivery of the product. A specific calibration manner is an idiomatic means of those skilled in the art, and is not intended to limit the scope of protection of the embodiment of the present disclosure. The calibration is suggested to be performed in order to achieve the above space angle standard.

At act 301, the display region for displaying information in correspondence to a current working mode is determined according to the obtained first angle and second angle.

Working modes of the wearable device are obtained. For example, different identifiers may be set in correspondence to different working modes to distinguish the working modes.

In the present invention, the working modes of the wearable device include a first working mode and a second working mode.

The first working mode is that a user wearing the wearable device is standing or sitting. As an example, the user may wear a watch on the left hand by convention. Under such a circumstance, an angle between the y axis and the horizontal plane when the arm sags naturally is about (-90±15) degrees. When an absolute value exceeds 90 degrees, a supplementary angle thereof is adopted to serve as the angle between the y axis and the horizontal plane when the arm sags naturally, and a symbol is kept. When the angle between the y axis and the horizontal plane exceeds ±30 degrees, the device is screened off automatically, and a watchband does not display information.

Under such a circumstance, when wanting to look at the watch, the user raises the arm. According to a watch looking habit, an angle between the sight and the horizontal plane is about (-30±5) degrees. When the angle between the y axis and the horizontal plane is smaller than or equal to 30 degrees, a pre-set first corresponding relationship between first and second angles and a display region is searched according to the angle between the x axis and the horizontal plane and the angle between the z axis and the horizontal plane to determine a display region of the watch face or the watchband for displaying information. After determining the display region, the information is displayed on the display region.

Taking Fig. 4 as an example, the first corresponding relationship may be shown in the following Table 1:

**Table 1**

| Angle (degree) between X axis and horizontal plane | Angle (degree) between Z axis and horizontal plane | Display region |
|---|---|---|
| 0±15 | 90±15 | 1 |
| 30±15 | 60±15 | 2 |
| 60±15 | 30±15 | 3 |
| 90±15 | 0±15 | 4 |
| 60±15 | -30±15 | 5 |
| 30±15 | -60±15 | 6 |
| 0±15 | -90±15 | 7 |
| -30±15 | -60±15 | 8 |
| -60±15 | -30±15 | 9 |
| -90±15 | 0±15 | 10 |
| -60±15 | 30±15 | 0 |
| -30±15 | 60±15 | 0 |

The second working mode is that a user wearing the wearable device is lying, and is looking at the watch with a vertically upward sight. Under such a circumstance, an angle between the sight and the horizontal plane is about (90 ± 15) degrees. When an absolute value exceeds 90 degrees, a supplementary angle thereof is adopted to serve as the angle between the sight and the horizontal plane, and a symbol is kept. A pre-set second corresponding relationship between first and second angles and a display region is searched according to the angle between the x axis and the horizontal plane and the angle between the z axis and the horizontal plane to determine a certain region of the watch face or the watchband for displaying information. After determining the display region, the information is displayed on the display region.

Taking Fig. 4 as an example, the second corresponding relationship may be shown in the following Table 2:

**Table 2**

| Angle (degree) between X axis and horizontal plane | Angle (degree) between Z axis and horizontal plane | Display region |
|---|---|---|
| 15±15 | -75±15 | 0 |
| 45±15 | -45±15 | 1 |
| 75±15 | -15±15 | 2 |
| 75±15 | 15±15 | 3 |
| 45±15 | 45±15 | 4 |
| 15±15 | 75±15 | 5 |
| 0±15 | 75±15 | 6 |
| -15±15 | 45±15 | 7 |
| -45±15 | 15±15 | 8 |
| -75±15 | -15±15 | 9 |
| -45±15 | -45±15 | 10 |
| -15±15 | -75±15 | 0 |

It may be appreciated that specific values in Table 1 and Table 2 are for illustration only, and are not intended to limit the scope of protection of the embodiments of the present disclosure. The specific values may be correspondingly adjusted according to practical usage situations such as wearing on the right hand and a finger or serving as glasses. Moreover, according to the above-mentioned solution provided in the embodiment of the present disclosure, this adjustment is implementable to those skilled in the art.

By adopting the method in the embodiments of the present disclosure, when taking a subway or bus, driving a car or walking, if wanting to check time or other information, a user wearing a wearable device may raise the wrist to directly check the information. Moreover, when waking up at night, the user can directly raise the wrist to check watch information without the need of rotating a watch face (the action of rotating the watch face may reduce sleepiness) to find a display surface, and therefore the influence on sleep quality is also avoided.

By means of the display implementation method based on the wearable device in the embodiments of the present disclosure, information can be conveniently and quickly displayed on the wearable device. The method can correctly and automatically display information needing to be displayed in front of the eyes of a user without the need for the user to manually adjust the position of a watchband to find the displayed information. For example, every time the user raises the hand, visual information such as time information can be correctly displayed at a suitable position in front of the eyes of the user.

The method in the embodiment of the present disclosure further includes an act of switching the working mode of the wearable device.

According to internal time, and intensity of acceleration and angle variations detected by an acceleration sensor and a gyroscope, the wearable device automatically switches between the first working mode and the second working mode. For example, the intensity of acceleration and angle variations may be set as follows. The variations may be deemed to be intense when the acceleration is greater than 0.1g, where g is an acceleration of gravity. The angles between the three axes and the horizontal plane may be read at an interval of 12s, the sum of absolute values of a difference between two successive angles of each axis may be marked as an angle increment, and the variations may be deemed to be intense when the angle increment within one minute is greater than 10 degrees and lasts for 3 minutes.

For example, when the internal time of the device is p.m. 22:00 to a.m. 5:00, if the acceleration sensor and the gyroscope do not sense continuous variations for a long time (such as pre-set ten minutes or other values) or are within a certain pre-set threshold, for example, the angle increment within 3 minutes is smaller than 10 degrees, and the acceleration is smaller than 0.1g, where g is the acceleration of gravity, the wearable device automatically switches from the first working mode to the second working mode.

For another example, when the internal time of the device is a.m. 10:00 to p.m. 18:00, the wearable device may automatically switch to the first working mode no matter whether the acceleration sensor and the gyroscope detect the variations.

Or, a current working mode is manually set as one of the above two working modes. For example, the user may select to make the wearable device enter the first working mode or the second working mode by using one or more keys around the watch face of the watch.

The method in the embodiment of the present disclosure further includes an act of selecting, via setting, configuration information indicative of whether to be capable of automatically switching between different working modes. If the setting is yes, the wearable device will automatically switch between the first working mode and the second working mode according to time, and intensity of acceleration and angle variations detected by the acceleration sensor and the gyroscope.

In the embodiment of the present disclosure, the wearable device enters the corresponding working mode according to user demands, thereby better ensuring the correctness of display implementation.

Fig. 5 is a composition structure diagram of a display implementation apparatus according to an embodiment of the present disclosure. As shown in Fig. 5, the apparatus includes an acquisition unit and a determination unit.

The acquisition unit is configured to acquire a first angle and a second angle for determining a display region.

The determination unit is configured to determine, according to the obtained first angle and second angle, the display region for displaying information in correspondence to a current working mode.

The apparatus in the embodiment of the present disclosure further includes a calibration unit (not shown in Fig. 5), configured to calibrate a wearable device. A space coordinate system of the wearable device is set up. Specifically, the space coordinate system is set up by taking a first direction of a front surface of the wearable device as a y axis, taking a second direction of the front surface of the wearable device as an x axis, and taking an upward direction perpendicular to the front surface of the wearable device as a z axis. A state in which the front surface of the wearable device points to a vertically upward direction is taken as a space angle standard, wherein an angle, tested by a gyroscope or other angle sensors in the state, between the x axis and a horizontal plane is 0 degree, an angle, tested by a gyroscope or other angle sensors in the state, between the y axis and the horizontal plane is 0 degree, and an angle, tested by a gyroscope or other angle sensors in the state, between the z axis and the horizontal plane is 90 degrees. During practical application, the gyroscope, an acceleration sensor and setup of the coordinate system are performed on the basis of data calibrated by the calibration unit.

Herein, the first angle is the angle between the x axis and the horizontal plane, and the second angle is the angle between the y axis and the horizontal plane. The determination unit is configured to:
search, when the working mode is a first working mode, a pre-set first corresponding relationship between first and second angles and a display region according to the first angle and the second angle to determine the display region; and search, when the working mode is a second working mode, a pre-set second corresponding relationship between first and second angles and a display region according to the first angle and the second angle to determine the display region.

The apparatus in the embodiment of the present disclosure further includes a working mode management unit configured to switch the working mode, and configured to:
automatically switch, according to time, and intensity of acceleration and angle variations detected by the acceleration sensor and the gyroscope, the wearable device between the first working mode and the second working mode;
or, make the wearable device enter the first working mode or the second working mode based on manual setting selection.

The working mode management unit is further configured to set configuration information indicative of whether to be capable of automatically switching between different working modes.

The display implementation apparatus of the embodiment of the present disclosure as shown in Fig. 5 is arranged in a wearable device. In this case, the wearable device includes a display unit and the display implementation apparatus of the embodiments of the present disclosure. The display unit may be a 360° region surrounding the wearable device, or may be a segment of camber surface in the wearable device.

The above is only the exemplary embodiments of the present disclosure, and not intended to limit the scope of the appended claims.

### Industrial Applicability

The embodiments of the present disclosure provide a display implementation method and apparatus, and a wearable device. In the method, a wearable device acquires a first angle and a second angle for determining a display region; and the display region for displaying information in correspondence to a current working mode is determined according to the obtained first angle and second angle. By means of the display implementation method based on the wearable device in some embodiments of the present disclosure, information can be conveniently and quickly displayed on the wearable device. The method can correctly and automatically display information needing to be displayed in front of the eyes of a user without the need for the user to manually adjust the position of a watchband to find the displayed information. For example, every time the user raises the hand, visual information such as time information can be correctly displayed at a suitable position in front of the eyes of the user.

## Claims

1. A display implementation method, when there is information to be displayed on a display unit of a wearable device, the method comprising:
acquiring, by the wearable device, a first angle and a second angle for determining a display region of the display unit (300); and
determining, according to the obtained first angle and second angle, the display region for displaying information in correspondence to a current working mode (301);
wherein before acquiring, by the wearable device, the first angle and the second angle for determining the display region (300), the method further comprises: calibrating the wearable device;
wherein the calibrating the wearable device comprises:
setting up a space coordinate system of the wearable device, wherein the space coordinate system is set up by taking a first direction of a front surface of the wearable device as a y axis, taking a second direction of the front surface of the wearable device as an x axis, and taking an upward direction perpendicular to the front surface of the wearable device as a z axis; and
taking a state in which the front surface of the wearable device points to a vertically upward direction as a space angle standard, wherein an angle, measured in the state, between the x axis and a horizontal plane is 0 degree, an angle, measured in the state, between the y axis and the horizontal plane is 0 degree, and an angle, measured in the state, between the z axis and the horizontal plane is +90 degrees;
wherein the first angle is the angle between the x axis and the horizontal plane; and the second angle is the angle between the z axis and the horizontal plane;
wherein
when the current working mode is a first working mode, determining the display region for displaying information (301) comprises:
searching, according to the first angle and the second angle, a pre-set first corresponding relationship between first and second angles and display regions of the display unit to determine the display region;
when the current working mode is a second working mode, determining the display region for displaying information (301) comprises:
searching, according to the first angle and the second angle, a pre-set second corresponding relationship, different from the pre-set first corresponding relationship, between first and second angles and display regions of the display unit to determine the display region;
wherein the first working mode is that a user wearing the wearable device is standing or sitting and the second working mode is that the user is lying, and is looking at the wearable device with a vertically upward sight; and
wherein the method further comprises:
automatically switching, by the wearable device according to time, and intensity of acceleration and angle variations detected by an acceleration sensor and a gyroscope of the wearable device, between the first working mode and the second working mode;
or, entering, by the wearable device, the first working mode or the second working mode based on manual setting selection.

2. The method as claimed in claim 1, before switching the working mode, the method further comprising:
setting configuration information indicative of whether to automatically switch between different working modes.

3. A wearable device, comprising a display unit, an acceleration sensor, a gyroscope, an acquisition unit and a determination unit, wherein
the acquisition unit is configured to acquire a first angle and a second angle for determining a display region of the display unit; and
the determination unit is configured to determine, according to the obtained first angle and second angle, the display region for displaying information in correspondence to a current working mode;
the wearable device further comprising a calibration unit, wherein the calibration unit is configured to:
set up a space coordinate system of the wearable device, wherein the space coordinate system is set up by taking a first direction of a front surface of the wearable device as a y axis, taking a second direction of the front surface of the wearable device as an x axis, and taking an upward direction perpendicular to the front surface of the wearable device as a z axis; and
take a state in which the front surface of the wearable device points to a vertically upward direction as a space angle standard, wherein an angle, measured in the state, between the x axis and a horizontal plane is 0 degree, an angle, measured in the state, between the y axis and the horizontal plane is 0 degree, and an angle, measured in the state, between the z axis and the horizontal plane is +90 degrees;
wherein the first angle is the angle between the x axis and the horizontal plane, and the second angle is the angle between the z axis and the horizontal plane; and
the determination unit is configured to:
search, when the current working mode is a first working mode, a pre-set first corresponding relationship between first and second angles and display regions of the display unit according to the first angle and the second angle to determine the display region; and
search, when the current working mode is a second working mode, a pre-set second corresponding relationship, different from the pre-set first corresponding relationship, between first and second angles and display regions of the display unit according to the first angle and the second angle to determine the display region;
wherein the first working mode is that a user wearing the wearable device is standing or sitting and the second working mode is that the user is lying, and is looking at the wearable device with a vertically upward sight; and
wherein the wearable device further comprises a working mode management unit, configured to:
automatically switch, according to time, and intensity of acceleration and angle variations detected by the acceleration sensor and the gyroscope, the wearable device between the first working mode and the second working mode;
or, make the wearable device enter the first working mode or the second working mode based on manual setting selection.

4. The wearable device as claimed in claim 3, wherein the display unit is a 360° region surrounding the wearable device, or a segment of camber surface in the wearable device.

5. A computer-readable storage medium, storing computer-executable instructions to cause the wearable device of claim 3 to execute the method as claimed in claim 1 or 2.

## Patentansprüche

1. Verfahren zur Implementierung einer Anzeige, wenn Informationen auf einer Anzeigeeinheit einer tragbaren Vorrichtung angezeigt werden sollen, wobei das Verfahren Folgendes umfasst:
Erfassen eines ersten Winkels und eines zweiten Winkels durch die tragbare Vorrichtung zur Bestimmung eines Anzeigebereichs der Anzeigeeinheit (300); und
Bestimmen, gemäß dem erhaltenen ersten Winkel und zweiten Winkel, des Anzeigebereichs zum Anzeigen von Informationen in Übereinstimmung mit einem aktuellen Arbeitsmodus (301);
wobei das Verfahren vor dem Erfassen des ersten Winkels und des zweiten Winkels zum Bestimmen des Anzeigebereichs (300) durch die tragbare Vorrichtung ferner umfasst: Kalibrieren der tragbaren Vorrichtung;
wobei das Kalibrieren der tragbaren Vorrichtung umfasst:
Einrichten eines Raumkoordinatensystems der tragbaren Vorrichtung, wobei das Raumkoordinatensystem eingerichtet wird, indem eine erste Richtung einer vorderen Oberfläche der tragbaren Vorrichtung als eine y-Achse genommen wird, eine zweite Richtung der vorderen Oberfläche der tragbaren Vorrichtung als eine x-Achse genommen wird, und eine nach oben gerichtete Richtung senkrecht zu der vorderen Oberfläche der tragbaren Vorrichtung als eine z-Achse genommen wird; und
Nehmen eines Zustands, in dem die vordere Oberfläche der tragbaren Vorrichtung in eine vertikal nach oben gerichtete Richtung zeigt, als Raumwinkelstandard, wobei ein in dem Zustand gemessener Winkel zwischen der x-Achse und einer horizontalen Ebene 0 Grad beträgt, ein in dem Zustand gemessener Winkel zwischen der y-Achse und der horizontalen Ebene 0 Grad beträgt und ein in dem Zustand gemessener Winkel zwischen der z-Achse und der horizontalen Ebene +90 Grad beträgt;
wobei der erste Winkel der Winkel zwischen der x-Achse und der horizontalen Ebene ist; und der zweite Winkel der Winkel zwischen der z-Achse und der horizontalen Ebene ist;
wobei
wenn der aktuelle Arbeitsmodus ein erster Arbeitsmodus ist, das Bestimmen des Anzeigebereichs zum Anzeigen von Informationen (301) umfasst:
Suchen, gemäß dem ersten Winkel und dem zweiten Winkel, einer voreingestellten ersten entsprechenden Beziehung zwischen dem ersten und dem zweiten Winkel und den Anzeigebereichen der Anzeigeeinheit, um den Anzeigebereich zu bestimmen;
wenn der aktuelle Arbeitsmodus ein zweiter Arbeitsmodus ist, das Bestimmen des Anzeigebereichs zum Anzeigen von Informationen (301) umfasst:
Suchen, gemäß dem ersten Winkel und dem zweiten Winkel, einer voreingestellten zweiten entsprechenden Beziehung, die sich von der voreingestellten ersten entsprechenden Beziehung unterscheidet, zwischen ersten und zweiten Winkeln und Anzeigebereichen der Anzeigeeinheit, um den Anzeigebereich zu bestimmen;
wobei der erste Arbeitsmodus darin besteht, dass ein Benutzer, der die tragbare Vorrichtung trägt, steht oder sitzt, und der zweite Arbeitsmodus darin besteht, dass der Benutzer liegt und die tragbare Vorrichtung mit einem vertikal nach oben gerichteten Blick ansieht; und
wobei das Verfahren ferner umfasst:
automatisches Umschalten zwischen dem ersten Arbeitsmodus und dem zweiten Arbeitsmodus durch das tragbare Gerät in Abhängigkeit von der Zeit und der Intensität der von einem Beschleunigungssensor und einem Gyroskop des tragbaren Geräts erfassten Beschleunigungs- und Winkeländerungen;
oder Eintritt in den ersten Arbeitsmodus oder den zweiten Arbeitsmodus durch die tragbare Vorrichtung auf der Grundlage einer manuellen Einstellungsauswahl.

2. Verfahren nach Anspruch 1, wobei das Verfahren vor dem Umschalten des Arbeitsmodus ferner umfasst:
Einstellen von Konfigurationsinformationen, die angeben, ob automatisch zwischen verschiedenen Arbeitsmodi umgeschaltet werden soll.

3. Tragbare Vorrichtung, umfassend eine Anzeigeeinheit, einen Beschleunigungssensor, ein Gyroskop, eine Erfassungseinheit und eine Bestimmungseinheit, wobei
die Erfassungseinheit konfiguriert ist, um einen ersten Winkel und einen zweiten Winkel zu erfassen, um einen Anzeigebereich der Anzeigeeinheit zu bestimmen; und
die Bestimmungseinheit so konfiguriert ist, dass sie gemäß dem erhaltenen ersten Winkel und dem erhaltenen zweiten Winkel den Anzeigebereich zum Anzeigen von Informationen in Übereinstimmung mit einem aktuellen Arbeitsmodus bestimmt;
die tragbare Vorrichtung ferner eine Kalibrierungseinheit umfasst, wobei die Kalibrierungseinheit konfiguriert ist, um:
Einrichten eines Raumkoordinatensystems der tragbaren Vorrichtung, wobei das Raumkoordinatensystem eingerichtet wird, indem eine erste Richtung einer vorderen Oberfläche der tragbaren Vorrichtung als eine y-Achse genommen wird, eine zweite Richtung der vorderen Oberfläche der tragbaren Vorrichtung als eine x-Achse genommen wird, und eine nach oben gerichtete Richtung senkrecht zu der vorderen Oberfläche der tragbaren Vorrichtung als eine z-Achse genommen wird; und
Nehmen eines Zustands, in dem die vordere Oberfläche der tragbaren Vorrichtung in eine vertikal aufwärts gerichtete Richtung zeigt, als einen Raumwinkelstandard, wobei ein in dem Zustand gemessener Winkel zwischen der x-Achse und einer horizontalen Ebene 0 Grad ist, ein in dem Zustand gemessener Winkel zwischen der y-Achse und der horizontalen Ebene 0 Grad ist und ein in dem Zustand gemessener Winkel zwischen der z-Achse und der horizontalen Ebene +90 Grad ist;
wobei der erste Winkel der Winkel zwischen der x-Achse und der horizontalen Ebene ist, und der zweite Winkel der Winkel zwischen der z-Achse und der horizontalen Ebene ist; und
die Bestimmungseinheit konfiguriert ist, um:
Suchen, wenn der aktuelle Arbeitsmodus ein erster Arbeitsmodus ist, einer voreingestellten ersten entsprechenden Beziehung zwischen dem ersten und zweiten Winkel und Anzeigebereichen der Anzeigeeinheit gemäß dem ersten Winkel und dem zweiten Winkel, um den Anzeigebereich zu bestimmen; und
Suchen, wenn der aktuelle Arbeitsmodus ein zweiter Arbeitsmodus ist, einer voreingestellten zweiten korrespondierenden Beziehung, die sich von der voreingestellten ersten korrespondierenden Beziehung unterscheidet, zwischen ersten und zweiten Winkeln und Anzeigebereichen der Anzeigeeinheit entsprechend dem ersten Winkel und dem zweiten Winkel, um den Anzeigebereich zu bestimmen;
wobei der erste Arbeitsmodus darin besteht, dass ein Benutzer, der die tragbare Vorrichtung trägt, steht oder sitzt, und der zweite Arbeitsmodus darin besteht, dass der Benutzer liegt und auf die tragbare Vorrichtung mit einem vertikal nach oben gerichteten Blick schaut; und
wobei die tragbare Vorrichtung ferner eine Arbeitsmodus-Verwaltungseinheit umfasst, die konfiguriert ist, um:
in Abhängigkeit von der Zeit und der Intensität der vom Beschleunigungssensor und vom Gyroskop erfassten Beschleunigungs- und Winkeländerungen die tragbare Vorrichtung automatisch zwischen dem ersten Arbeitsmodus und dem zweiten Arbeitsmodus umzuschalten;
oder das tragbare Gerät auf der Grundlage einer manuellen Einstellungsauswahl in den ersten Arbeitsmodus oder den zweiten Arbeitsmodus zu versetzen.

4. Tragbare Vorrichtung nach Anspruch 3, wobei die Anzeigeeinheit ein 360°-Bereich ist, der die tragbare Vorrichtung umgibt, oder ein Segment einer gewölbten Oberfläche in der tragbaren Vorrichtung.

5. Computerlesbares Speichermedium, das computerausführbare Befehle speichert, um die tragbare Vorrichtung nach Anspruch 3 zu veranlassen, das Verfahren nach Anspruch 1 oder 2 auszuführen.

## Revendications

1. Procédé de mise en œuvre d'affichage, lorsqu'il y a des informations à afficher sur une unité d'affichage d'un dispositif portable, le procédé comprenant :
acquérir, par le dispositif portable, d'un premier angle et d'un deuxième angle pour déterminer une région d'affichage de l'unité d'affichage (300) ; et
déterminer, selon le premier angle et le second angle obtenus, la région d'affichage pour afficher des informations en correspondance avec un mode de travail actuel (301) ;
dans lequel, avant acquérir, par le dispositif portable, du premier angle et du second angle pour déterminer la région d'affichage (300), le procédé comprend en outre : calibrer le dispositif portable ;
dans lequel le calibrage du dispositif portable comprend :
établir un système de coordonnées spatiales du dispositif portable, dans lequel le système de coordonnées spatiales est établi en prenant une première direction d'une surface frontale du dispositif portable en tant qu'axe y, en prenant une deuxième direction de la surface frontale du dispositif portable en tant qu'axe x, et en prenant une direction vers le haut perpendiculaire à la surface frontale du dispositif portable en tant qu'axe z ; et
prendre un état dans lequel la surface frontale du dispositif portable pointe vers une direction verticale ascendante en tant que norme d'angle spatial, dans lequel un angle, mesuré dans l'état, entre l'axe x et un plan horizontal est de 0 degré, un angle, mesuré dans l'état, entre l'axe y et le plan horizontal est de 0 degré, et un angle, mesuré dans l'état, entre l'axe z et le plan horizontal est de +90 degrés ;
dans lequel le premier angle est l'angle entre l'axe x et le plan horizontal ; et le second angle est l'angle entre l'axe z et le plan horizontal ; dans lequel
lorsque le mode de travail actuel est un premier mode de travail, la détermination de la région d'affichage pour afficher des informations (301) comprend :
rechercher, en fonction du premier angle et du deuxième angle, d'une première relation correspondante préétablie entre les premier et deuxième angles et les régions d'affichage de l'unité d'affichage pour déterminer la région d'affichage ;
lorsque le mode de travail actuel est un second mode de travail, la détermination de la région d'affichage pour afficher des informations (301) comprend :
rechercher, selon le premier angle et le deuxième angle, d'une deuxième relation correspondante préétablie, différente de la première relation correspondante préétablie, entre les premier et deuxième angles et les régions d'affichage de l'unité d'affichage pour déterminer la région d'affichage ;
dans lequel le premier mode de travail est qu'un utilisateur portant le dispositif portable est debout ou assis et le second mode de travail est que l'utilisateur est couché, et regarde le dispositif portable avec une vue verticale vers le haut ; et
dans lequel le procédé comprend en outre
commuter automatiquement, par le dispositif portable en fonction du temps et de l'intensité des variations d'accélération et d'angle détectées par un capteur d'accélération et un gyroscope du dispositif portable, entre le premier mode de travail et le second mode de travail ;
ou, entrer, par le dispositif portable, du premier mode de travail ou du second mode de travail sur la base d'une sélection de réglage manuel.

2. Procédé selon la revendication 1, avant de commuter le mode de travail, le procédé comprend en outre :
le réglage d'informations de configuration indiquant s'il faut commuter automatiquement entre différents modes de travail.

3. Dispositif portable, comprenant une unité d'affichage, un capteur d'accélération, un gyroscope, une unité d'acquisition et une unité de détermination, dans lequel
l'unité d'acquisition est configurée pour acquérir un premier angle et un deuxième angle pour déterminer une région d'affichage de l'unité d'affichage ; et
l'unité de détermination est configurée pour déterminer, selon le premier angle et le second angle obtenus, la région d'affichage pour afficher des informations en correspondance avec un mode de travail actuel ;
le dispositif portable comprend en outre une unité de calibrage, dans lequel l'unité de calibrage est configurée pour :
établir un système de coordonnées spatiales du dispositif portable, dans lequel le système de coordonnées spatiales est établi en prenant une première direction d'une surface frontale du dispositif portable comme axe y, en prenant une seconde direction de la surface frontale du dispositif portable comme axe x, et en prenant une direction vers le haut perpendiculaire à la surface frontale du dispositif portable comme axe z ; et
prendre un état dans lequel la surface frontale du dispositif portable pointe vers une direction verticale ascendante en tant que norme d'angle spatial, dans lequel un angle, mesuré dans l'état, entre l'axe x et un plan horizontal est de 0 degré, un angle, mesuré dans l'état, entre l'axe y et le plan horizontal est de 0 degré, et un angle, mesuré dans l'état, entre l'axe z et le plan horizontal est de +90 degrés ;
dans lequel le premier angle est l'angle entre l'axe x et le plan horizontal, et le second angle est l'angle entre l'axe z et le plan horizontal ; et
l'unité de détermination est configurée pour :
rechercher, lorsque le mode de travail actuel est un premier mode de travail, une première relation correspondante prédéfinie entre les premier et second angles et les régions d'affichage de l'unité d'affichage selon le premier angle et le second angle pour déterminer la région d'affichage ; et
rechercher, lorsque le mode de travail actuel est un second mode de travail, une seconde relation correspondante prédéfinie, différente de la première relation correspondante prédéfinie, entre les premier et second angles et les régions d'affichage de l'unité d'affichage selon le premier angle et le second angle pour déterminer la région d'affichage ;
dans lequel le premier mode de travail est qu'un utilisateur portant le dispositif portable est debout ou assis et le second mode de travail est que l'utilisateur est couché, et regarde le dispositif portable avec une vue verticale vers le haut ; et
dans lequel le dispositif portable comprend en outre une unité de gestion de mode de travail, configurée pour :
commuter automatiquement, en fonction du temps et de l'intensité des variations d'accélération et d'angle détectées par le capteur d'accélération et le gyroscope, le dispositif portable entre le premier mode de travail et le second mode de travail ;
ou, faire entrer le dispositif portable dans le premier mode de travail ou le second mode de travail sur la base d'une sélection de réglage manuel.

4. Dispositif portable selon la revendication 3, dans lequel l'unité d'affichage est une région de 360° entourant le dispositif portable, ou un segment de surface cambrée dans le dispositif portable.

5. Support de stockage lisible par ordinateur, stockant des instructions exécutables par ordinateur pour amener le dispositif portable de la revendication 3 à exécuter le procédé selon la revendication 1 ou 2.
